# EUROPÄISCHE PATENTSCHRIFT

(11) **EP 0 611 677 B1**
(45) Veröffentlichungstag und Bekanntmachung des Hinweises auf die Patenterteilung: **14.05.1997**
(21) Anmeldenummer: 94102442.4
(22) Anmeldetag: 17.02.1994
(51) Int. Cl.: B60P 3/08, B62D 21/12

(54) **Transportvorrichtung**
Transport device
Dispositif de transport

(30) Priorität: 19.02.1993 DE 9302474 U
(43) Veröffentlichungstag der Anmeldung: 24.08.1994
(73) Patentinhaber: Kässbohrer Transport Technik GmbH, A-5020 Salzburg (AT)
(72) Erfinder: Däuber, Wilfried, D-83395 Freilassing (DE)
(74) Vertreter: Grünecker, Kinkeldey, Stockmair & Schwanhäusser Anwaltssozietät

(56) Entgegenhaltungen:
- EP-A- 0 241 711
- EP-A- 0 424 296
- EP-A- 0 464 241
- GB-A- 2 129 745
- GB-A- 2 137 938
- US-A- 1 991 484
- US-A- 2 096 455

## Beschreibung

Die Erfindung betrifft eine Transportvorrichtung mit einem Fahrerhaus und einem Fahrzeugrahmen mit Vorder- und Hinterachsaggregat und zumindest einer Ladebühne zum Transport von Fahrzeugen.

Eine solche aus der Praxis vorbekannte Transportvorrichtung wird im allgemeinen aus einem vorgefertigten Chassis mit einem Fahrerhaus und unterschiedlichen Aufbauten zusammengesetzt. Das vorgefertigte Chassis kann von verschiedenen Herstellern stammen und ist bereits mit einem Antriebsaggregat, Vorder- und Hinterachsaggregat und weiteren Einrichtungen wie Kupplung, Schaltgetriebe, Federung oder dergleichen versehen. Die Aufbauten werden nachfolgend auf dem Chassis zur Herstellung der Transportvorrichtung angebracht. Die Transportvorrichtung weist nach Fertigstellung wenigstens eine untere Ladebühne mit Fahrbahnen auf, auf welche eine Anzahl von Fahrzeugen auffahrbar sind.

Bei der Herstellung einer Transportvorrichtung sind verschiedene Vorschriften bezüglich der Fahrzeuglänge, -höhe, -breite, des Fahrzeuggesamtgewichts und dergleichen zu beachten, die in den verschiedenen Auslieferungsstaaten gelten. Weiterhin sind zusätzliche Vorschriften für Fahrzeuge zum Befahren von Innenstädten zu beachten, die von den Städten oder Gemeinden beispielsweise bezüglich des zulässigen Gesamtgewichts des Fahrzeugs erlassen werden.

Bei der vorbekannten Transportvorrichtung ist es daher von Nachteil, daß zur Berücksichtigung aller Wünsche der Kunden und Forderungen beziehungsweise Vorschriften der unterschiedlichen Staaten, Länder, Städte oder Gemeinden eine Vielzahl von unterschiedlichen Fahrzeugen im Fertigungsprogramm des Transportvorrichtungsherstellers enthalten sein müssen, was eine entsprechend kostenintensive Fertigung und Lagerhaltung zur Folge hat.

Der Erfindung liegt daher die Aufgabe zugrunde, den Aufbau einer Transportvorrichtung mit einer relativ geringen Anzahl von Einzelteilen einfach, in vielfältiger Form und für Fahrzeuge unterschiedlicher Hersteller zu ermöglichen.

Diese Aufgabe wird bei einer Transportvorrichtung der eingangs genannten Art dadurch gelöst, daß der Transporter einen Bausatz mit wenigstens drei Bausatzsektionen aufweist, wobei eine erste Sektion I aus Fahrerhaus, Vorderachsaggregat und einem Rahmenvorderteil, eine zweite Sektion II aus einem Rahmenverbindungsteil und einer Fahrbahn und eine dritte Sektion III aus einem Rahmenanschlußteil, einer Anschlußfahrbahn und einem Hinterachsaggregat gebildet ist und wobei die verschiedenen Rahmenteile zur Bildung des Fahrzeugrahmens über Schnittstellen untereinander verbunden sind.

Durch die Verwendung eines Bausatzes für die Transportvorrichtung ist diese einfach und schnell an unterschiedliche Anforderungen durch die Kunden an entsprechende Vorschriften anpaßbar. Die Bausatzsektionen sind vorgefertigt und sind in einfacher Weise miteinander verbindbar. Die Sektion I ist vorgefertigt von den entsprechenden Herstellern erhältlich und bildet ein Frontelement der Transportvorrichtung. Der zugehörige Rahmenvorderteil ist relativ kurz ausgebildet und zur Verbindung mit dem Rahmenverbindungsteil der Sektion II genormt hergestellt. Auf diese Weise sind Sektionen I unterschiedlicher Hersteller ohne Schwierigkeiten einsetzbar. Die Sektion II bestimmt insbesondere die Gesamtlänge des Fahrzeugs. Sie ist vorgefertigt mit einer Fahrbahn ausgebildet, die einen Teil der Ladebühne bildet. Die Transportvorrichtung wird durch die Sektion III vervollständigt, welche insbesondere ein Hinterachsaggregat aufweist. Weiterhin wird durch Sektion III der Rahmen und die Fahrbahn der Ladebühne ergänzt. Durch Sektion II wird außer der Länge der kompletten Transportvorrichtung, die Höhe von Sektion I beziehungsweise Sektion III mit dem zugehörigen Achsaggregat festgelegt beziehungsweise ausgeglichen. Durch Sektion III ist insbesondere die Fahrgestellhöhe sowie das zulässige Gesamtgewicht variierbar.

Um ein Auffahren auf die Ladebühne zu vereinfachen, ist es insbesondere von Vorteil, wenn in Sektion III ein Auffahrrahme verschieblich gelagert ist.

Bei einer anderen Ausführungsform der Erfindung ist eine zumindest ein Rahmenheckteil, eine Verlängerungsfahrbahn und eine Auffahrrampe umfassende vierte Sektion IV heckseitig an Sektion III angeordnet. Sektion IV ist wie die übrigen Sektionen vorgefertigt und kann zur Erhöhung der Ladekapazität angeordnet werden. Wird die Transportvorrichtung im Bereich der Sektionen II bis IV mit niedriger Bauhöhe hergestellt, ist eine Auffahrt ohne zusätzliche Auffahrrampe möglich. In diesem Fall kann auf eine Auffahrrampe in Sektion IV verzichtet werden.

Ein ähnliches Heckteil für eine Transportvorrichtung ist aus der DE 35 09 314 C2 bekannt. Allerdings ist bei diesem Heckteil eine Hubeinrichtung integriert. Eine Anpassung der Transportvorrichtung an unterschiedliche Kundenwünsche oder an unterschiedliche gesetzliche Vorschriften ist durch das vorbekannte Heckteil im wesentlichen nicht möglich.

Um die Ladekapazität der Transportvorrichtung weiter zu erhöhen, ist als Hubvorrichtung für eine sechste Sektion VI eine fünfte Sektion V zumindest zweimal an Rahmenteilen von Sektion I und/oder Sektion II und/oder Sektion III und/oder Sektion IV angebracht, wobei Sektion VI als Hebebühne ausgebildet ist. Die Hubvorrichtungen sind im wesentlichen am vorderen Ende beziehungsweise am hinteren Ende der Hebebühne angeordnet, wobei diese insbesondere zum Beladen mit Fahrzeugen am hinteren Ende absenkbar beziehungsweise anhebbar ist.

Bei einer alternativen Ausführungsform der Erfindung weist die Transportvorrichtung einen Bausatz mit wenigstens den Bausatzsektionen II, III, V und VI auf, wobei die dritte Sektion III aus dem Rahmenanschlußteil und einer Anschlußfahrbahn gebildet ist. Bei dieser Ausführungsform der Erfindung wird die aus dem Bausatz zusammengesetzte Transportvorrichtung von oben auf ein Fahrzeug mit einem Fahrerhaus und einem Fahrzeugrahmen mit Vorder- und Hinterachsaggregat aufgesetzt. Die Transportvorrichtung wird darauffolgend am Fahrzeugrahmen befestigt. In diesem Fall wird die vorgefertigte Transportvorrichtung im Hinblick auf die Wünsche der Kunden und Forderungen beziehungsweise Vorschriften der unterschiedlichen Staaten, Länder, Städte oder Gemeinden angepaßt und ist auf eine Vielzahl von unterschiedlichen Fahrzeugen befestigbar.

Zwar ist aus der EP 0 214 918 B1 ein Fahrzeugtransporter mit einer Lastwagenkarosserie und einem Fahrgestell mit Kabine bekannt, wobei die als Fahrzeugtransporteinheit verwendete Lastwagenkarosserie auf dem Fahrgestell montierbar ist. Allerdings ist dabei die Lastwagenkarosserie mit einem eigenen Hinterachsaggregat versehen und wird in Art eines Anhängers auf dem Fahrgestell aufgesattelt, wobei insbesondere die Befestigung und Zuordnung von Fahrgestell und Lastwagenkarosserie in der EP 0 214 919 B1 im Vordergrund steht. Stattdessen ist die erfindungsgemäße Transportvorrichtung als Bausatz ausgebildet und ist in einfacher Weise an unterschiedliche Fahrgestelle durch Verwendung entsprechender Bausatzsektionen anpaßbar. Weiterhin ist beispielsweise bei einem Unfall, eine beschädigte Bausatzsektion einfach austauschbar.

In diesem Zusammenhang ist es weiterhin von Vorteil, wenn die dritte Sektion III zur Aufnahme des Hinterachsaggregats mit seitlichen Radhauben ausgebildet ist. Auf diese Weise sind am Hinterachsaggregat angeordnete Räder sicher umgeben. Das Fahrzeug mit Fahrerhaus und Fahrzeugrahmen braucht nur die unbedingt notwendigen Bauteile aufzuweisen. Nach Aufsetzen der Transportvorrichtung und deren Befestigung am Fahrzeugrahmen ist ein vollständiger Fahrzeugtransporter gegeben.

Ist die dritte Sektion III im Bereich des Hinterachsaggregats nach oben gewölbt, ist ein entsprechendes Hinterachsaggregat des Fahrzeugs in einfacher Weise in diesem Bereich anordbar. Die Anschlußfahrbahn der Sektion III ist entsprechender Weise gewölbt und zur Aufnahme wenigstens eines zu transportierenden Fahrzeugs geeignet. Durch die Wölbung der Sektion III ist die Transportvorrichtung tiefer relativ zum Fahrzeugrahmen anordbar.

Bei einer weiteren Ausführungsform der Erfindung ist die Transportvorrichtung mit dem Fahrzeugrahmen lösbar befestigt. Auf diese Weise ist ein einfacher Austausch von Transportvorrichtungen möglich, wobei diese im Bereitschaftszustand, das heißt, wenn sie nicht auf dem Fahrzeug angeordnet sind, auf entsprechende Vorrichtungen aufbockbar sind. Eine solche Vorrichtung kann beispielsweise durch an der Transportvorrichtung verschwenkbar gelagerte Stützen gebildet sein.

Dabei ist es weiterhin von Vorteil, wenn eine als Tragbühne ausgebildete siebte Sektion VII über dem Fahrerhaus angeordnet und an der vorderen Hubeinrichtung der Sektion V verschwenkbar befestigt ist, wobei Sektion VII von Sektion VI befahrbar ist. Auf diese Weise ist die Transportvorrichtung zumindest mit einem weiteren Fahrzeug beladbar.

Bei einer einfachen Ausführungsform der Erfindung sind ein Antriebsaggregat und/oder eine Kupplungseinrichtung und/oder ein Schaltgetriebe in Sektion I angeordnet. Als Antriebsaggregat ist ein Verbrennungsmotor oder ein Elektromotor einsetzbar. Das Schaltgetriebe ist auch durch ein Automatikgetriebe ersetzbar.

Weiterhin kann in Sektion I das Vorderachsaggregat in bekannter Weise mit einer Stahlblatt- oder Luftachsfederung ausgestattet sein. Eine Vorderachse des Vorderachsaggregats kann außerdem vom Antriebsaggregat angetrieben sein.

Um in vorteilhafter Weise die verschiedenen Sektionen im Hinblick auf deren elektrische, hydraulische, pneumatische oder sonstige Versorgung miteinander zu verbinden, weisen die Schnittstellen zwischen Sektion I und/oder Sektion II und/oder Sektion III und/oder Sektion IV und/oder Sektion V und/oder Sektion VI und/oder Sektion VII Verbindungselemente für unter anderem die zugehörigen Versorgungsleitungen auf. Die Verbindungselemente sind steckbar, schraubbar oder dergleichen ausbildbar.

Zur Verbesserung der Vorfertigung und um von den Sektionen I der unterschiedlichen Hersteller unabhängig zu sein, ist es von Vorteil, wenn in Sektion II Zusatzaggregate wie Batteriekasten, Luftkesselanlage, Werkzeugkasten, Ersatzradhalter oder dergleichen angeordnet sind.

Je nach Größe der Transportvorrichtung ist das Hinterachsaggregat der Sektion III mit einer oder zwei Achsen ausgebildet. Je nach Ausführungsform ist wenigstens eine der Achsen angetrieben und/oder gelenkt. Die Achsen können eine Einfach- oder Zwillingsbereifung aufweisen. Die Lenkung kann in bekannter Weise als Zwangs- oder Reibungslenkung ausgebildet sein. Weiterhin kann Sektion III eine Stahlblatt- oder Luftfederung aufweisen, wobei pro Achse eine Hebe- und Senkvorrichtung und für das Hinterachsaggregat ein mechanischer, pneumatischer oder hydraulischer Achslastausgleich vorgesehen sein kann.

Bei einer weiteren vorteilhaften Ausführungsform weist Sektion IV eine Fahrbahn mit ausfahrbarem Rampenkasten und ausziehbarer Auffahrrampe auf. Der Rampenkasten ist in der Fahrbahn integriert und dient zusammen mit der Auffahrrampe zum Beladen und Entladen des Transporters. Rampenkasten und Auffahrrampe sind manuell oder hydraulisch beziehungsweise pneumatisch betätigbar.

Bei einer weiteren günstigen Ausführungsform ist Sektion IV mit einer in Länge und Höhe verstellbaren Auffahrbühne ausgebildet. Diese ist insbesondere als hydraulisch verstellbare Stapelschiene verwendbar.

Die Hubvorrichtungen der Sektion V sind in bekannter Weise als Hubsäule und/oder einarmige und/oder zweiarmige Hubschwinge ausbildbar. Die Hubsäule kann beispielsweise einen Hydraulikzylinder oder ein Spindelhubgetriebe aufweisen. Die Hubsäule ist zumindest am vorderen Ende der Hebebühne angeordnet und weist ein Drehlager für diese auf. Die Hubvorrichtungen sind jeweils paarweise einander gegenüberliegend an den Längsseiten der Transportvorrichtung angeordnet. Bei einer Ausführungsform der Erfindung ist die Tragbühne der Sektion VII als Ladeplattform ausgebildet. Diese ist zumindest an ihrem hinteren Ende an der vorderen Hubvorrichtung verschwenkbar und höhenverstellbar gelagert.

Bei einer vorteilhaften Ausführungsform sind Sektion II und/oder Sektion III und/oder Sektion IV und/oder Sektion VI und/oder Sektion VII mit längenveränderlichen Fahrbahnen und/oder mit an wenigstens einem Ende höhenverstellbaren Schwenkbühnen ausgebildet. Die Fahrbahnen können manuell, hydraulisch oder pneumatisch längenverschiebbar sein. In ähnlicher Weise sind die Schwenkbühnen manuell, hydraulisch oder pneumatisch höhenverstellbar.

In diesem Zusammenhang ist es günstig, wenn die längenveränderlichen Fahrbahnen Verschiebestücke aufweisen, die vorne und/oder hinten anhebbar sind. Weiterhin können insbesondere die Hebebühne und Tragbühne eine als am hinteren Ende nach unten verschwenkbare Schwenkbühne (Negativbühne) ausgebildete, höhenverstellbare Schwenkbühne aufweisen. Diese kann hinten und vorne manuell, hydraulisch oder pneumatisch verschwenkbar und verlängerbar sein. Dadurch ist eine Schachtelung der Fahrzeug auf der Transportvorrichtung möglich, wodurch die Ladekapazität erhöht wird.

Um in einfacher Weise die verschiedenen Sektionen miteinander zu verbinden, ist die jeweilige Schnittstelle als Verbindungsflansch ausgebildet, wobei die Sektionen an den Schnittstellen untereinander lösbar befestigt sind. Neben einer verschraubbaren Flanschverbindung der Sektionen ist auch ein verschweißen möglich. Die Flanschverbindungen sind dabei einheitlich ausgebildet, um die Verbindung der Sektionen untereinander zu erleichtern.

Zur Erhöhung der Ladekapazität ist es weiterhin von Vorteil, wenn Sektion VII an seinem dem Sektion VI zuweisenden Ende eine Negativbühne aufweist. Dadurch ist ein Fahrzeug in den Zwischenraum eines auf der Hebebühne und eines auf der darunterliegenden Ladebühne angeordneten Fahrzeugs verschwenkbar.

Um die Negativbühne in einfacher Weise an Fahrerhäuser unterschiedlicher Hersteller anzupassen, ist die Negativbühne über seitlich angeordnete Lenker in Form eines auf dem Kopf stehenden V an Sektion VII oberhalb des Fahrerhauses verschwenkbar angelenkt. Die von den beiden V-Schenkeln gebildete V-Öffnung weist dabei in Richtung einer oberen, hinteren Kante des Fahrerhauses, so daß auch bei einem Fahrerhaus mit rückwärtig angesetzter Schlafkammer ein Verschwenken der Negativbühne möglich ist. Auf diese Weise muß eine spezielle Anpassung der Lenker der Negativbühne an Fahrerhäuser unterschiedlicher Hersteller nicht separat durchgeführt werden.

Bei einer weiteren vorteilhaften Ausführungsform bilden die an Sektion I angeschlossenen Sektionen einen selbsttragenden Aufbau, der wie vorstehend beschrieben in einfacher Weise durch Hinzufügen weiterer Sektionen oder durch Ersetzen einer Sektion durch eine anders aufgebaute Sektion herstellbar ist.

Außer zum Transport von Fahrzeugen ist die Transportvorrichtung bei abgesenkter Hebebühne in bekannter Weise auch mit Wechselbrücken, Containern oder Generalcargo beladbar.

Auch wenn die Beschreibung der Transportvorrichtung insbesondere vorstehend für ein selbstfahrendes Zugfahrzeug erfolgte, ist in analoger Weise eine als Anhänger ausgebildete Transportvorrichtung als Bausatz ausbildbar. Der Anhänger kann ein Vorder- und Hinterachsaggregat oder ein Zentralachsaggregat aufweisen. Das Achsaggregat ist wie beim Zugfahrzeug in einer entsprechenden Sektion des Bausatzes enthalten. Weiterhin sind die Hubvorrichtungen für eine gegebenenfalls vorhandene Hebebühne als entsprechende Sektionen ausbildbar. Untere Ladebühne beziehungsweise Hebebühne können wie das Zugfahrzeug entsprechende Auffahrrampen, Auffahrbühnen, Verlängerungsschienen, Stapelschienen oder dergleichen aufweisen. Die Hubvorrichtungen sind ebenfalls analog zum Zugfahrzeug als Hebesäulen oder Hubschwingen ausbildbar.

Im folgenden wird die Erfindung anhand von in der Zeichnung dargestellten Figuren durch zwei Ausführungsbeispiele näher erläutert und beschrieben.

Es zeigen:
- Fig.1: eine Seitenansicht einer erfindungsgemäßen Transportvorrichtung, und
- Fig.2: eine Seitenansicht einer weiteren Ausführungsform der erfindungsgemäßen Transportvorrichtung.

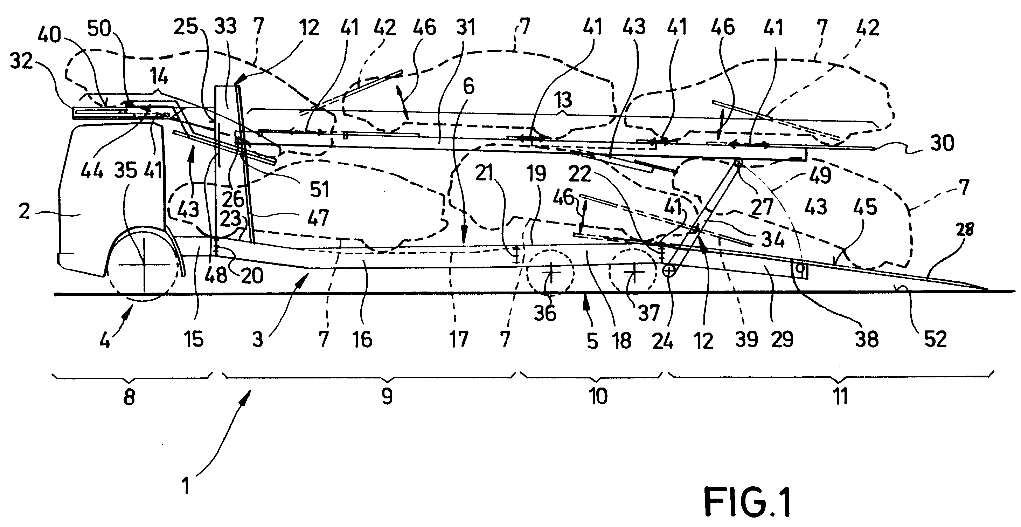

Die Transportvorrichtung 1 aus Figur 1 ist aus einem Bausatz mit einer Anzahl von Bausatzsektionen I bis VII entsprechend zu den Bezugszeichen 8 bis 14 aufgebaut. Die Transportvorrichtung weist eine untere Ladebühne 6 und eine obere Hebebühne 31 sowie eine im wesentlichen über einem Fahrerhaus 2 angeordnete Ladeplattform 40 auf, auf der insgesamt sechs Fahrzeuge 7 angeordnet sind.

Die Sektion I 8 umfaßt das Fahrerhaus 2, ein Vorderachsaggregat 4 und einen Rahmenvorderteil 15. An dem Rahmenvorderteil 15 ist eine Vorderachse 35 des Vorderachsaggregats 4 gelagert und das Fahrerhaus 2 ist zusammen mit in diesem enthaltenem Antriebsaggregat, Kupplungsvorrichtung, Getriebe und dergleichen auf dem Rahmenvorderteil 15 angeordnet.

Die Sektion II 9 schließt sich heckseitig über eine Schnittstelle 20 an Sektion I 8 an. Die Schnittstelle 20 ist zwischen dem Rahmenvorderteil 15 und einem Rahmenverbindungsteil 16 ausgebildet. Auf dem Rahmenverbindungsteil 16 ist die durch Fahrbahnen 17 gebildete Ladebühne 6 angeordnet. Die Fahrbahnen 17 sind zumindest im mittleren Bereich des Rahmenverbindungsteils 16 gegenüber einer Oberseite des Rahmenverbindungsteils 16 abgesenkt. Das Rahmenverbindungsteil 16 ist durch zumindest zwei Rahmenlängsträger und eine Anzahl von Querträgern gebildet.

Über eine weitere Schnittstelle 21 am Ende der Sektion II 9 ist heckseitig eine Sektion III 10 angeschlossen. Diese weist ein Rahmenanschlußteil 18, ein Hinterachsaggregat 5 und Anschlußfahrbahnen 19 auf. Die Anschlußfahrbahnen 19 verlängern die Fahrbahnen 17 der Ladebühne 6 nach hinten und dienen zur Aufnahme eines weiteren Fahrzeugs 7. Das Hinterachsaggregat 5 weist eine vordere Hinterachse 36 und eine hintere Hinterachse 37 auf. Von diesen ist wenigstens eine zusätzlich zur Vorderachse 35 antreibbar und/oder lenkbar. Über eine weitere Schnittstelle 22 schließt sich an Sektion III 10 eine Sektion IV 11 an, die ein Ende der Transportvorrichtung 1 bildet. Die Sektion IV 11 weist ein Rahmenheckteil 29 auf das in Verlängerung des Rahmenanschlußteils 18 angeordnet ist. Auf dem Rahmenheckteil 29 ist eine Fahrbahn 45 angeordnet, die eine Auffahrbühne 39 aufweist, die sowohl in Richtungen 41 ausschiebbar beziehungsweise einschiebbar und in Schwenkrichtungen 46 höhenverstellbar ist. Am heckseitigen Ende der Fahrbahn 45 ist ein Rampenkasten 38 integriert, in dem eine Auffahrrampe 28 verschieblich gelagert ist. Diese ist in Figur 1 zum Entladen eines Fahrzeugs 7 auf eine Straßenoberfläche 52 abgesenkt.

Die über die entsprechenden Schnittstellen 20, 21 und 22 miteinander verbundenen Rahmenteile 15, 16, 18 und 29 bilden insgesamt einen Fahrzeugrahmen 3 der Transportvorrichtung 1. Dieser ist in bekannter Weise durch zumindest zwei Längsträger und eine Anzahl von zwischen diesen angeordneten Querträgern gebildet.

Am vorderen Ende des Rahmenverbindungsteils 16 ist benachbart zur Schnittstelle 20 auf dem Rahmenverbindungsteil an einer Schnittstelle 23 ein als Hubsäule 33 ausgebildeter erster Teil der Sektion V 12 angeordnet. Die Hubsäule 33 verläuft im wesentlichen vertikal, wobei Sektion VI 13 und Sektion VII 14 an ihren der Hubsäule zugeordneten Enden jeweils in Richtungen 47 beziehungsweise 48 höhenverstellbar gelagert sind.

Am vorderen Ende des Rahmenheckteils 29 ist in Höhe der Hinterachsen 36 beziehungsweise 37 eine als einarmige Hubschwinge 34 ausgebildeter zweiter Teil der Sektion V 12 angeordnet. Als Schnittstelle zwischen Sektion IV 11 und der Hubschwinge 34 ist eine Lagerachse 24 für ein unteres Ende der Hubschwinge 34 ausgebildet. Um diese Lagerachse 24 ist die Hubschwinge 34 um den Schwenkwinkel 49 nach unten verschwenkbar. Als weitere Schnittstelle zwischen der Hubschwinge 34 und der Sektion VI 13 dient eine obere Lagerachse 27 unterhalb einer Hebebühne 31. Beim Verschwenken der Hubschwinge 34 um den Winkel 49 in Richtung zum Rahmenheckteil 29 gerät die Hebebühne 31 mit ihrem hinteren Ende mit der Fahrbahn 45 beziehungsweise der Auffahrrampe 28 der Sektion IV 11 in Anlage, so daß ein Be- beziehungsweise Entladen von Fahrzeugen 7 auf beziehungsweise von der Hebebühne 31 möglich ist.

Hubsäule 33 und Hubschwinge 34 sind jeweils paarweise an Längsseiten der Transportvorrichtung 1 angeordnet.

Die Hebebühne 31 erstreckt sich im wesentlichen zwischen der Hubsäule 33 und der Hubschwinge 34. An ihrem hinteren Ende weist sie eine Verlängerungsfahrbahn 30 auf, die zur Aufnahme eines Fahrzeugs 7 ein in Richtungen 41 längenveränderliche und in Schwenkrichtungen 46 höhenveränderliche Schwenkbühne 42 aufweist. Eine weitere, nach unten in Richtungen 46 verschwenkbare Negativbühne 43 schließt sich in Richtung Fahrerhaus 2 an die Verlängerungsfahrbahn 30 an. Die Negativbühne 43 ist an ihrem heckseitigen Ende in Richtungen 41 längenveränderlich. Im Bereich einer Schwenkachse für die Negativbühne 43 weist diese auf der Hebebühne 31 eine weitere in Richtungen 41 längenveränderliche Verlängerungsfahrbahn auf.

In Figur 1 ist die Negativbühne zwischen einer Hinterachse eines Fahrzeugs 7 und einer Vorderachse eines weiteren Fahrzeugs 7 im wesentlichen horizontal in Ebene der Hebebühne 31 angeordnet. Die Darstellung der nach unten verschwenkten Negativbühne 43 zusätzlich in Figur 1 dient zur besseren Erläuterung und zur Hervorhebung der vielseitigen Einsatzmöglichkeiten der Transportvorrichtung 1.

Am vorderen Ende der Hebebühne 31 ist eine weitere Schwenkbühne 42 angeordnet, die an ihrem hinteren Ende in Richtungen 46 höhenverstellbar und an ihrem vorderen Ende in Richtungen 41 längenveränderlich ist. Benachbart zu dieser Schwenkbühne 42 ist die Hebebühne 31 verschwenkbar und höhenveränderlich an einem Lagerpunkt 26 als Schnittstelle an der Hubsäule 33 verstellbar gelagert.

Die letzte Sektion VII 14 weist eine Ladeplattform 40 und eine gegenüber dieser nach unten verschwenkbare Negativbühne 43 mit einer Bühnenplattform 51 auf. Sektion VII 14 ist über Schnittstelle 25 an der Hubsäule 33 im wesentlichen oberhalb des Fahrerhauses 2 angeordnet. Die Negativbühne 43 ist über seitliche Lenker 44 in Form eines umgekehrten V an einer Schwenkachse 50 in etwa mittig zur Ladeplattform 50 verschwenkbar gelagert. Eine Tragbühne 32 der Ladeplattform 40 ist in Richtungen 41 zur Aufnahme eines Fahrzeugs 7 längenveränderlich. Zur Anpassung an unterschiedliche Fahrerhäuser 2 sind die beiden V-Arme des Lenkers 44 unter einem stumpfen Winkel zueinander angeordnet, wobei die V-Öffnung einer oberen, hinteren Kante des Fahrerhauses 2 zuweist. Bei der in Figur 1 dargestellten, nach unten verschwenkten Stellung der Negativbühne 43 verläuft ein V-Arm des Lenkers 44 im wesentlichen horizontal und parallel zur Ladeplattform 40 beziehungsweise Tragbühne 32.

Die in Figur 1 dargestellte Transportvorrichtung 1 stellt eine Ausführungsform mit einer Anordnung aller Sektionen I - VII 8 bis 14 dar. In einfachster Ausführungsform würde die Transportvorrichtung 1 nur die Sektionen I, II, III 8 bis 10 umfassen. In diesem Fall wäre beispielsweise im Rahmenanschlußteil 18 beziehungsweise der Anschlußfahrbahn 19 eine Auffahrrampe 28 verschieblich gelagert. Je nach Bedarf weist das Rahmenverbindungsteil 16 eine im wesentlichen die Gesamtlänge der Transportvorrichtung 1 bestimmende Länge auf. Sektion I 8 beziehungsweise Sektion III 10 sind in ihrer Länge im wesentlichen festgelegt. Sektion III 10 ist durch Verwendung eines einachsigen Hinteraggregats 5 bezüglich Gewicht und Länge verkleinerbar. Weitere Sektionen sind in entsprechender Weise hinzufügbar oder durch anders ausgebildete Sektionen ersetzbar.

Ein nicht dargestellter Anhänger der Transportvorrichtung 1 ist in analoger Weise durch einen Bausatz mit einer Anzahl von Bausatzsektionen aufbaubar.

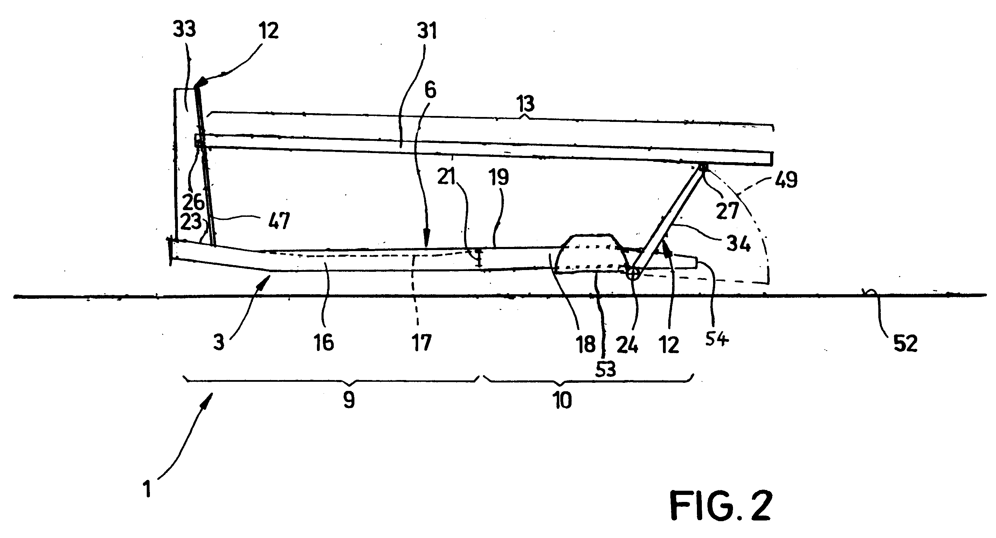

In Figur 2 ist eine alternative Ausführungsform der erfindungsgemäßen Transportvorrichtung 1 dargestellt. In diesem Fall ist die Transportvorrichtung durch Bausatzsektionen II, III, V und VI 9, 10, 12, 13 gebildet. Ein Fahrzeug mit einem entsprechenden Fahrzeugrahmen und einem Fahrerhaus ist in einfacher Weise unter die Transportvorrichtung 1 einfahrbar, wobei entsprechende Vorrichtungen zum Aufbocken der Transportvorrichtung in Figur 2 nicht dargestellt sind.

Die Sektion II 9 weist wie in Figur 1 ein Rahmenverbindungsteil 16 und eine Fahrbahn 17 auf. Über die Schnittstelle 21 ist die Sektion III 10 mit Sektion II verbunden. Die Sektion III 10 weist das Rahmenanschlußteil 18 und die Anschlußfahrbahn 19 auf. In etwa mittig zur Sektion III sind seitlich zu dieser Radhauben 53 zur Aufnahme von Rädern eines nichtdargestellten Hinterachsaggregats angeordnet. Anschließend zur Radhaube 53 ist die Sektion V 12 angeordnet, welche als hintere Hubschwinge 34 ausgebildet ist. Diese ist an ihrem oberen Ende über die Schnittstelle 27 und an ihrem unteren Ende über die Schnittstelle 24 um einen Schwenkwinkel 49 verschwenkbar gelagert. Oberhalb der Sektionen II und III ist die Sektion VI angeordnet. Diese ist durch die Hebebühne 31 gebildet. Benachbart zu ihrem hinteren Ende ist die Hebebühne 31 an der Schnittstelle 27 der hinteren Hubschwinge 34 gelagert. An ihrem vorderen Ende ist die Hebebühne 31 über die Schnittstelle 26 zur Höhenverstellung 47 an der Hubsäule 33 gelagert. Die Hubsäule 33 bildet zusammen mit der Hubschwinge 34 die Sektion V. An ihrem unteren Ende ist die Hubsäule 33 über die Schnittstelle 23 mit dem Rahmenverbindungsteil 16 der Sektion II verbunden.

Entsprechend zu dem in Figur 1 dargestellten Beispiel ist die Transportvorrichtung 1 der Figur 2 mit einer zusätzlichen Sektion IV beziehungsweise VII und entsprechend mit verschwenkbaren und oder ausziehbaren Schwenkbühnen, Negativbühnen, Tragbühnen oder Auffahrrampen ausbildbar. Insbesondere bei Fehlen der Sektion IV ist im hinteren Ende 54 der Sektion III eine ausfahrbare Auffahrrampe verschieblich gelagert. In ähnlicher Weise kann im hinteren Ende der Sektion VI eine Verlängerungsfahrbahn, siehe Figur 1, gelagert sein.

Je nach Ausführungsform des unter der Transportvorrichtung 1 der Figur 2 anordbarem Fahrzeugs, kann die Transportvorrichtung bei einer weiteren Ausführungsform der Erfindung durch einen Bausatz mit Sektionen V und VI, das heißt aus Hubvorrichtungen 33 beziehungsweise 34 und Hebebühne 31 gebildet sein. In diesem Fall weist das zugehörige Fahrzeug beispielsweise eine untere Ladebühne 6 auf, mit der entsprechend über Schnittstellen 23 und 24 die Hubvorrichtung 33 und 34 verbindbar sind. Am Heck dieses Fahrzeugs kann außerdem eine Sektion IV, siehe Figur 1, angeordnet werden.

Allen vorstehend geschilderten Ausführungsformen der Erfindung ist gemeinsam, daß die jeweilige Transportvorrichtung 1 durch einen eine Anzahl von Sektionen umfassenden Bausatz aufgebaut und erweiterbar ist. Die Sektionen sind je nach Bedarf austauschbar, wobei beispielsweise die Sektion III je nach verwendetem Hinterachsaggregat ausgebildet ist oder die Sektion II beispielsweise mit einer im Vergleich zu den Figuren 1 oder 2 größeren Länge ausgebildet ist. Weiterhin ist beispielsweise zur Erhöhung der Stabilität bei einer Transportvorrichtung 1 nur aus den Sektionen V und VI, die Sektion V durch zwei Hubsäulen ausbildbar.

## Patentansprüche

1. Transportvorrichtung (1) mit einem Fahrerhaus (2) und einem Fahrzeugrahmen (3) mit Vorder- und Hinterachsaggregat (4, 5) und zumindest einer Ladebühne (6) zum Transport von Fahrzeugen (7),
**dadurch gekennzeichnet,**
daß die Transportvorrichtung (1) einen Bausatz mit wenigstens drei Bausatzsektionen (8, 9, 10, 11, 12, 13, 14) aufweist, wobei eine erste Sektion I (8) aus Fahrerhaus (2), Vorderachsaggregat (4) und einem Rahmenvorderteil (15), eine zweite Sektion II (9) aus einem Rahmenverbindungsteil (16) und einer Fahrbahn (17) und eine dritte Sektion III (10) aus einem Rahmenanschlußteil (18), einer Anschlußfahrbahn (19) und einem Hinterachsaggregat (5) gebildet ist und wobei die verschiedenen Rahmenteile (15, 16, 18) zur Bildung des Fahrzeugrahmens (3) über Schnittstellen (20, 21) untereinander verbunden sind.

2. Transportvorrichtung (1) nach Anspruch 1,
**dadurch gekennzeichnet,**
daß in Sektion III (10) eine Auffahrrampe (28) verschieblich gelagert ist.

3. Transportvorrichtung nach Anspruch 1,
**dadurch gekennzeichnet,**
daß eine zumindest ein Rahmenheckteil (29), eine Verlängerungsfahrbahn (30) und eine Auffahrrampe (28) umfassende vierte Sektion IV (11) heckseitig an Sektion III (10) angeordnet ist.

4. Transportvorrichtung nach wenigstens einem der vorangehenden Ansprüche,
**dadurch gekennzeichnet,**
daß eine als Hubvorrichtung (33, 34) für eine sechste Sektion VI (13) ausgebildete fünfte Sektion V (12) zumindest zweimal an Rahmenteilen (15, 16, 18, 29) von Sektion I (8) und/oder Sektion II (9) und/oder Sektion III (10) und/oder Sektion IV (11) angebracht ist, wobei Sektion VI (13) als Hebebühne (31) ausgebildet ist.

5. Transportvorrichtung, insbesondere nach einem der vorangehenden Ansprüche, welche auf einem ein Fahrerhaus (2) und einen Fahrzeugrahmen mit Vorder- und Hinterachsaggregaten (4, 5) aufweisenden Fahrzeug befestigbar ist,
**dadurch gekennzeichnet,**
daß die Transportvorrichtung einen Bausatz mit wenigstens den Bausatzsektionen II, III, V und VI (9, 10, 12, 13) aufweist, wobei die dritte Sektion III (10) aus dem Rahmenanschlußteil (18) und einer Anschlußfahrbahn (19) gebildet ist.

6. Transportvorrichtung nach Anspruch 5,
**dadurch gekennzeichnet,**
daß die dritte Sektion III (10) zur Aufnahme des Hinterachsaggregats (5) mit seitlichen Radhauben (53) ausgebildet ist.

7. Transportvorrichtung nach wenigstens einem der vorangehenden Ansprüche,
**dadurch gekennzeichnet,**
daß die dritte Sektion III (10) im Bereich des Hinterachsaggregats (5) nach oben gewölbt ist.

8. Transportvorrichtung nach einem der Ansprüche 5 bis 7,
**dadurch gekennzeichnet,**
daß die Transportvorrichtung (1) mit dem Fahrzeugrahmen lösbar befestigt ist.

9. Transportvorrichtung nach wenigstens einem der vorangehenden Ansprüche,
**dadurch gekennzeichnet,**
daß eine als Tragbühne (32) ausgebildete siebte Sektion VII (14) über dem Fahrerhaus (2) angeordnet und an der vorderen Hubvorrichtung (33) lösbar befestigt ist, wobei Sektion VII (14) von Sektion VI (13) befahrbar ist.

10. Transportvorrichtung nach wenigstens einem der vorangehenden Ansprüche,
**dadurch gekennzeichnet,**
daß ein Antriebsaggregat und/oder eine Kupplungseinrichtung und/oder ein Schaltgetriebe in Sektion I (8) angeordnet ist.

11. Transportvorrichtung nach wenigstens einem der vorangehenden Ansprüche,
**dadurch gekennzeichnet,**
daß das Vorderachsaggregat (4) eine Stahlblatt- oder Luftachsfederung aufweist.

12. Transportvorrichtung nach wenigstens einem der vorangehenden Ansprüche,
**dadurch gekennzeichnet,**
daß Schnittstellen (20 bis 27) zwischen Sektion I (8) und/oder Sektion II (9) und/oder Sektion III (10) und/oder Sektion IV (11) und/oder Sektion V (12) und/oder Sektion VI (13) und/oder Sektion VII (14) Verbindungselemente für unter anderem Versorgungsleitungen aufweisen.

13. Transportvorrichtung nach wenigstens einem der vorangehenden Ansprüche,
**dadurch gekennzeichnet,**
daß in Sektion II (9) Zusatzaggregate wie Batteriekasten, Luftkesselanlage, Werkzeugkasten, Ersatzradhalter oder dergleichen angeordnet sind.

14. Transportvorrichtung nach wenigstens einem der vorangehenden Ansprüche,
**dadurch gekennzeichnet,**
daß das Hinterachsaggregat (5) in der Sektion III (10) mit einer oder zwei Achsen (36, 37) ausgebildet ist.

15. Transportvorrichtung nach Anspruch 10,
**dadurch gekennzeichnet,**
daß wenigstens eine Achse (36, 37) angetrieben und/oder gelenkt ist.

16. Transportvorrichtung nach wenigstens einem der vorangehenden Ansprüche,
**dadurch gekennzeichnet,**
daß das Hinterachsaggregat (5) eine Achslastausgleichseinrichtung und/oder wenigstens eine Hebe- und Senkvorrichtung für eine Hinterachse (16, 17) aufweist.

17. Transportvorrichtung nach wenigstens einem der vorangehenden Ansprüche,
**dadurch gekennzeichnet,**
daß die Sektion IV (11) eine Fahrbahn (45) mit ausfahrbarem Rampenkasten (38) und ausziehbarer Auffahrrampe (28) aufweist.

18. Transportvorrichtung nach wenigstens einem der vorangehenden Ansprüche,
**dadurch gekennzeichnet,**
daß Sektion IV (11) mit einer in Länge und Höhe verstellbaren Auffahrbühne (39) ausgebildet ist.

19. Transportvorrichtung nach wenigstens einem der vorangehenden Ansprüche,
**dadurch gekennzeichnet,**
daß die Hubvorrichtungen (33, 34) der Sektion V (12) als Hubsäule (33) und/oder einarmige und/oder zweiarmige Hubschwinge (34) ausgebildet sind.

20. Transportvorrichtung nach wenigstens einem der vorangehenden Ansprüche,
**dadurch gekennzeichnet,**
daß die Tragbühne (32) als Ladeplattform (40) ausgebildet ist.

21. Transportvorrichtung nach wenigstens einem der vorangehenden Ansprüche,
**dadurch gekennzeichnet,**
daß Sektion II (9) und/oder Sektion III (10) und/oder Sektion IV (11) und/oder Sektion VI (13) und/oder Sektion VII (14) mit längenveränderlichen Fahrbahnen (17, 19, 30, 45) und/oder mit an wenigstens einem Ende höhenverstellbaren Schwenkbühnen (42) ausgebildet sind.

22. Transportvorrichtung nach wenigstens einem der vorangehenden Ansprüche,
**dadurch gekennzeichnet,**
daß die längenveränderlichen Fahrbahnen (17, 19, 30, 45) vorne und/oder hinten anhebbar sind.

23. Transportvorrichtung nach wenigstens einem der vorangehenden Ansprüche,
**dadurch gekennzeichnet,**
daß die höhenverstellbare Schwenkbühne als am hinteren Ende nach unten verschwenkbare Schwenkbühne (43) ausgebildet ist.

24. Transportvorrichtung nach wenigstens einem der vorangehenden Ansprüche,
**dadurch gekennzeichnet,**
daß jede Schnittstelle (20 bis 27) jeweils als Verbindungsflansch ausgebildet ist.

25. Transportvorrichtung nach wenigstens einem der vorangehenden Ansprüche,
**dadurch gekennzeichnet,**
daß die Sektionen (8 bis 14) an ihren Schnittstellen (20 bis 27) untereinander lösbar befestigt sind.

26. Transportvorrichtung nach wenigstens einem der vorangehenden Ansprüche,
**dadurch gekennzeichnet,**
daß die Sektion VII (14) an ihrem der Sektion VI (13) zuweisenden Ende eine Negativbühne (43) aufweist.

27. Transportvorrichtung nach wenigstens einem der vorangehenden Ansprüche,
**dadurch gekennzeichnet,**
daß die Negativbühne (43) über seitlich angeordnete Lenker im wesentlichen in Form eines auf dem Kopf stehenden V an Sektion VII (14) oberhalb des Fahrerhauses (2) verschwenkbar angelenkt ist.

28. Transportvorrichtung nach wenigstens einem der vorangehenden Ansprüche,
**dadurch gekennzeichnet,**
daß die Sektionen II bis VII (9 bis 14) einen selbsttragenden Aufbau bilden.

## Claims

1. Transporter (1) with a driver's cab (2) and a vehicle chassis (3) with front and rear axle assemblies (4, 5) and at least one load platform (6) for transporting vehicles (7), characterized in that the transporter (1) comprises an assembly with at least three sections (8, 9, 10, 11, 12, 13, 14), a first section - Section I (8) - being formed by a driver's cab (2), front axle assembly (4) and forward frame component (15), a second section - Section II (9) - being formed by a connecting frame component (16) and driveway (17), and a third section - Section III (10) - being formed by a frame extension (18), driveway extension (19) and rear axle assembly (5), the various frame components (15, 16, 18) being joined together at break points (20, 21) to form the chassis (3).

2. Transporter (1) according to Claim 1, characterized in that a drive-on ramp (28) is slidably mounted in Section III (10).

3. Transporter according to Claim 1, characterized in that a fourth section - Section IV (11) - comprising at least a rear frame component (29), a driveway extension (30) and a drive-on ramp (28) is arranged at the rear of Section III (10).

4. Transporter according to at least one of the preceding claims, characterized in that a fifth section - Section V (12) -, formed as a lifting device (33, 34) for a sixth section - Section VI (13) -, is attached at at least two points to frame components (15, 16, 18, 29) of Section I (8) and/or Section II (9) and/or Section III (10) and/or Section IV (11), with Section VI (13) formed as a lift platform (31).

5. Transporter, in particular according to one of the preceding claims, which is mountable on a vehicle comprising a driver's cab (2) and a chassis with front and rear axle assemblies (4, 5), characterized in that the transporter comprises an assembly with at least the sections II, III, V and VI (9, 10, 12, 13), the third section - Section III (10) - being formed by the frame extension (18) and a driveway extension (19).

6. Transporter according to Claim 5, characterized in that the third section - Section III (10) - is formed with lateral wheel covers (53) to accommodate the rear axle assembly (5).

7. Transporter according to at least one of the preceding claims, characterized in that the third section - Section III (10) - is arched upwardly in the region of the rear axle assembly (5).

8. Transporter according to any one of Claims 5 to 7, characterized in that the transporter (1) is releasably attached to the vehicle chassis.

9. Transporter according to at least one of the preceding claims, characterized in that a seventh section - Section VII (14) - constructed as a support stage (32) is arranged above the driver's cab (2) and is releasably attached to the forward lifting device (33), so that it can be driven on to Section VII (14) from Section VI (13).

10. Transporter according to at least one of the preceding claims, characterized in that an engine and/or clutch and/or gearbox is/are arranged in Section I (8).

11. Transporter according to at least one of the preceding claims, characterized in that the front axle assembly (4) has leaf-spring or pneumatic axle suspension.

12. Transporter according to at least one of the preceding claims, characterized in that break points (20 to 27) between Section I (8) and/or Section II (9) and/or Section III (10) and/or Section IV (11) and/or Section V (12) and/or Section VI (13) and/or Section VII (14) have connection elements which include connection elements for supply lines.

13. Transporter according to at least one of the preceding claims, characterized in that ancillary equipment such as battery box, air receiver unit, toolbox, spare wheel holder and the like are arranged in Section II (9).

14. Transporter according to at least one of the preceding claims, characterized in that the rear axle assembly (5) in Section III (10) is constructed with one or two axles (36, 37).

15. Transporter according to Claim 10, characterized in that at least one axle (36, 37) is driven and/or steered.

16. Transporter according to at least one of the preceding claims, characterized in that the rear axle assembly (5) has an axle load equalizing device and/or at least one raising and lowering device for a rear axle (16, 17).

17. Transporter according to at least one of the preceding claims, characterized in that Section IV (11) has a driveway (45) with extendable ramp box (38) and telescoping drive-on ramp (28).

18. Transporter according to at least one of the preceding claims, characterized in that Section IV (11) is constructed with a drive-on platform (39) adjustable in length and height.

19. Transporter according to at least one of the preceding claims, characterized in that the lifting devices (33, 34) of Section V (12) are constructed as a lifting column (33) and/or single and/or dual rocker arms (34).

20. Transporter according to at least one of the preceding claims, characterized in that the support stage (32) is constructed as a load platform (40).

21. Transporter according to at least one of the preceding claims, characterized in that Section II (9) and/or Section III (10) and/or Section IV (11) and/or Section VI (13) and/or Section VII (14) are constructed with driveways of variable length (17, 19, 30, 45) and/or with tilting platforms (42) which are vertically adjustable at at least one end.

22. Transporter according to at least one of the preceding claims, characterized in that the variable-length driveways (17, 19, 30, 45) are raisable at the front and/or rear.

23. Transporter according to at least one of the preceding claims, characterized in that the vertically adjustable tilting platform is constructed as a tilting platform (43) which can be hinged down at the rear end.

24. Transporter according to at least one of the preceding claims, characterized in that each break point (20 to 27) is formed as a connecting flange.

25. Transporter according to at least one of the preceding claims, characterized in that the sections (8 to 14) are releasably attached to each other at their break points (20 to 27).

26. Transporter according to at least one of the preceding claims, characterized in that Section VII (14) has a drop platform (43) at its end adjacent to Section VI (13).

27. Transporter according to at least one of the preceding claims, characterized in that the drop platform (43) is hinged to Section VII (14) above the driver's cab (2) by laterally located swinging arms which are essentially in the form of an inverted V.

28. Transporter according to at least one of the preceding claims, characterized in that Sections II to VII (9 to 14) form a self-supporting structure.

## Revendications

1. Dispositif de transport (1) comportant une cabine de conduite (2) et un châssis de véhicule (3) à bloc d'essieu avant et bloc d'essieu arrière (4, 5) et au moins une plate-forme de chargement (6) pour le transport de véhicules (7), caractérisé par le fait que le dispositif de transport (1) présente un ensemble ayant au moins trois sections (8, 9, 10, 11, 12, 13, 14), une première section I (8) étant formée de la cabine de conduite (2), du bloc d'essieu avant (4) et d'une partie avant de châssis (15), une deuxième section II (9) formée d'une partie de liaison de châssis (16) et d'un chemin de roulement (17) et une troisième section III (10) formée d'une partie de raccordement de châssis (18), d'un chemin de roulement de raccordement (19) et d'un bloc d'essieu arrière (5), et les différentes parties (15, 16, 18) du châssis étant reliées entre elles par des jonctions (20, 21) pour la formation du châssis de véhicule (3).

2. Dispositif de transport (1) selon la revendication 1, caractérisé par le fait qu'une rampe d'accès (28) est montée mobile dans la section III (10).

3. Dispositif de transport selon la revendication 1, caractérisé par le fait qu'une quatrième section IV (11) comprenant au moins une partie arrière de châssis (29), un chemin de roulement de rallonge (30) et une rampe d'accès (28) est placée du côté arrière sur la section III (10).

4. Dispositif de transport selon au moins une des revendications précédentes, caractérisé par le fait qu'une cinquième section V (12) constituée d'un dispositif élévateur (33, 34) pour une sixième section VI (13) est montée au moins deux fois sur des parties de châssis (15, 16, 18, 29) de la section I (8) et/ou la section (9) et/ou la section III (10) et/ou la section IV (11), la section VI (13) étant constituée d'une plate-forme élévatrice (31).

5. Dispositif de transport, en particulier selon une des revendications précédentes, qui peut être fixé sur un véhicule présentant une cabine de conduite (2) et un châssis de véhicule ayant un bloc d'essieu avant et un bloc d'essieu arrière (4, 5), caractérisé par le fait que le dispositif de transport présente un ensemble comportant au moins les sections II, III, V et VI (9, 10, 12, 13), la troisième section III (10) étant formée de la partie de raccordement de châssis (18) et d'un chemin de roulement de raccordement (19).

6. Dispositif de transport selon la revendication 5, caractérisé par le fait que la troisième section III (10) est conçue pour recevoir le bloc d'essieu arrière (5) avec des garde-boue latéraux (53).

7. Dispositif de transport selon au moins une des revendications précédentes, caractérisé par le fait que la troisième section III (10) est incurvée vers le haut dans la zone du bloc d'essieu arrière (5).

8. Dispositif de transport selon l'une des revendications 5 à 7, caractérisé par le fait que le dispositif de transport (1) est fixé de manière détachable au châssis de véhicule.

9. Dispositif de transport selon au moins une des revendications précédentes, caractérisé par le fait qu'une septième section VII (14) constituée d'une plate-forme support (32) est placée au-dessus de la cabine de conduite (2) et fixée de manière détachable au dispositif élévateur avant (33), cette section VII (14) étant franchissable par la section VI (13).

10. Dispositif de transport selon au moins une des revendications précédentes, caractérisé par le fait qu'un groupe moteur et/ou un dispositif d'embrayage et/ou un dispositif de changement de vitesse est placé dans la section I (8).

11. Dispositif de transport selon au moins une des revendications précédentes, caractérisé par le fait que le bloc d'essieu avant (4) présente une suspension d'essieu à lames d'acier ou pneumatique.

12. Dispositif de transport selon au moins une des revendications précédentes, caractérisé par le fait que les jonctions (20 à 27) entre la section I (8) et/ou la section II (9) et/ou la section III (10) et/ou la section IV (11) et/ou la section V (12) et/ou la section VI (13) et/ou la section VII (14) présentent des éléments de raccordement entre autres pour des conduites d'alimentation.

13. Dispositif de transport selon au moins une des revendication précédentes, caractérisé par le fait que dans la section II (9) sont placés des blocs supplémentaires tels que boîte à batterie, installation à réservoir d'air, boîte à outils, support de roue de secours ou éléments semblables.

14. Dispositif de transport selon au moins une des revendications précédentes, caractérisé par le fait que le bloc d'essieu arrière (5), situé dans la section III (10), comporte un ou deux essieux (36, 37).

15. Dispositif de transport selon la revendication 10, caractérisé par le fait qu'au moins un essieu (36, 37) est entraîné et/ou dirigé.

16. Dispositif de transport selon au moins une des revendications précédentes, caractérisé par le fait que le bloc d'essieu arrière (5) présente un dispositif compensateur de charge d'essieu et/ou au moins un dispositif élévateur et abaisseur pour un essieu arrière (36, 37).

17. Dispositif de transport selon au moins une des revendications précédentes, caractérisé par le fait que la section IV (11) présente un chemin de roulement (45) comportant une boîte à rampe pouvant être sortie (38) et une rampe d'accès télescopique (28).

18. Dispositif de transport selon au moins une des revendications précédentes, caractérisé par le fait que la section IV (11) est pourvue d'une plate-forme d'accès (39) réglable en longueur et en hauteur.

19. Dispositif de transport selon au moins une des revendications précédentes, caractérisé par le fait que les dispositifs élévateurs (33, 34) de la section V (12) sont constitués d'une colonne élévatrice (33) et/ou d'une bascule élévatrice (34) à un bras et/ou à deux bras.

20. Dispositif de transport selon au moins une des revendications précédentes, caractérisé par le fait que la plate-forme support (32) est une plate-forme de chargement (40).

21. Dispositif de transport selon au moins une des revendications précédentes, caractérisé par le fait que la section II (9) et/ou la section III (10) et/ou la section IV (11) et/ou la section VI (13) et/ou la section VII (14) sont pourvues de chemins de roulement de longueur variable (17, 19, 30, 45) et/ou de plates-formes basculantes (42) réglables en hauteur à au moins une extrémité.

22. Dispositif de transport selon au moins une des revendications précédentes, caractérisé par le fait que les chemins de roulement de longueur variable (17, 19, 30, 45) peuvent être levés à l'avant et/ou à l'arrière.

23. Dispositif de transport selon au moins une des revendications précédentes, caractérisé par le fait que la plate-forme basculante est une plate-forme basculante (43) pouvant être basculée vers le bas à son extrémité arrière.

24. Dispositif de transport selon au moins une des revendications précédentes, caractérisé par le fait que chacune des jonctions (20 à 27) est constituée d'une bride de raccordement.

25. Dispositif de transport selon au moins une des revendications précédentes, caractérisé par le fait que les sections (8 à 14) sont fixées de manière détachable entre elles à leurs jonctions (20 à 27).

26. Dispositif de transport selon au moins une des revendications précédentes, caractérisé par le fait que la section VII (14) présente une plate-forme négative (43) à son extrémité dirigée vers la section VI (13).

27. Dispositif de transport selon au moins une des revendications précédentes, caractérisé par le fait que la plate-forme négative (43) est articulée basculante à la section VII (14) au-dessus de la cabine de conduite (2) par des bielles placées latéralement sensiblement sous la forme d'un V renversé.

28. Dispositif de transport selon au moins une des revendications précédentes, caractérisé par le fait que les sections II à VII (9 à 14) forment une construction autoportante.
